# EUROPEAN PATENT SPECIFICATION

(11) **EP 3 554 889 B1**
(45) Date of publication and mention of the grant of the patent: **04.11.2020**
(21) Application number: 17829174.6
(22) Date of filing: 15.12.2017
(51) Int. Cl.: B60N 2/28

(54) **CHILD SAFETY SEAT FOR A VEHICLE**
KINDERSICHERHEITSSITZ FÜR EIN FAHRZEUG
SIÈGE DE SÉCURITÉ POUR ENFANT POUR UN VÉHICULE

(30) Priority: 16.12.2016 NO 20162008
(43) Date of publication of application: 23.10.2019
(73) Proprietor: HTS Hans Torgersen & Sønn AS, 3535 Krøderen (NO)
(72) Inventor: VAN ESSEN, Christian, 1079 GP Amsterdam (NL); BAAS, Erik, 3981 AM Bunnik (NL); VAN MOURIK, Okke, 3514 BS Utrecht (NL)
(74) Representative: Onsagers AS
(86) International application number: PCT/EP2017/083083
(87) International publication number: WO 2018/109177

(56) References cited:
- DE-A1-102015 214 910

## Description

The present invention relates to a child safety seat and is particularly concerned with providing a child safety seat that can conveniently be fitted into and removed from a vehicle seat in a motor vehicle as required, to enable more than one child safety seat to be safely accommodated in the vehicle seat of the motor vehicle.

It is well known in the automotive industry to provide child safety seats to secure infants to passenger vehicles and to provide booster seats to secure children who are too big for child safety seats but are not big enough to sit in the vehicle seats without seating assistance. While known booster seats generally work well for their intended purposes, they create a problem when it is desired to secure several children in a vehicle.

Infants and young children typically ride in motor vehicles in specially configured and secured child safety seats until the child reaches a specified age such as, for example, five or six years or until the child reaches a desired height and/or weight. The vehicle seats provide an ability to use the safety restraints and safety features of vehicles with small children and infants. Generally, the child safety seats utilize a seat frame having one or more interfaces for securing the child safety seat to the vehicle safety restraints such as, for example vehicle safety belt, Isofix connectors etc.

In many instances, families may have two or more children of ages requiring each child to use a child safety seat. This can occur when siblings are close in age and born within one, two, three or four year time period. However, one increasingly frequent instance when families have two or more children is when the family experiences the birth of multiples, such as, for example, twins and triplets.

It is noted that when seating is required for a plurality of child safety seat users, a separate child safety seat is needed for each child safety seat user. Thus, each child safety seat user requires a separate regular seat built into the vehicle. Thus, a family or group including a plurality of children and/or other child safety seat users is limited in seating capacity by the adult seating capacity of the vehicle being used. This limitation manifests itself as a serious problem for large families and/or groups that find it difficult to meet child safety seats need for all their children or to meet the needs of child safety seats users of the group. These families must either not meet vehicle seating requirements or leave one or more children out of the vehicle.

Furthermore, over recent years safety measures have become as a critical factor for vehicles, and various vehicular child safety seats have been developed as a device for ensuring the safety of a new-born baby, an infant, a toddler and a child of school age (referred generally as "child" hereinafter) riding in a vehicle.

Child safety seats have been designed to be fitted into the vehicle seat and secured to the vehicle seat by using a vehicle's adult lap and diagonal belt part of the vehicle seat belt, or sometimes just the lap belt part of the vehicle seat belt.

Furthermore, the child safety seats are often padded with different energy absorbing materials, which will reduce the forces a child is exposed to during a collision (i.e. a side impact crash), for instance when head or other parts of the child "hits" the child safety seat, as these forces may be very high. However, vehicle seats, vehicle seat belts, anchorage points etc. vary greatly between different models of vehicles, which may result in a child safety seat not being fitted correctly into the vehicle seat.

WO 03/055717 A1 regards a children's safety seat, where the children's safety seat comprises a seat body including a base portion for being positioned on an existing seat of a vehicle and a back portion extending up from said base portion. The seat body has a divider means connected to the seat body for sub-dividing the seat body to provide a plurality of individual seats for accommodating two more children side-by-side. Releasable anchoring means are provided for connecting the seat body to anchorage points in said vehicle. The children's safety seat is provided with a plurality of adjustable support legs for engaging a body of the vehicle below said base portion and for supporting and providing additional rigidity to the seat body. The support legs are coupled to the base portion for vertical and horizontal movement with respect to the base portion. The support legs incorporate energy-absorbing structures that absorb energy in the event of the vehicle being involved in an accident.

US 5.518.293 regards a child car seat with two laterally disposed seats, where the child car seat comprises a seat frame having a base portion and an upwardly extending back portion in a generally L-shaped configuration and a downwardly extending leg portion, the base portion having forwardly extending vertical edges at the exterior edges of the seat and at a central vertical divider to divide the seat into a first side and a second side. A seat cushion and a back cushion positionable upon the base and back portions of the frame of each of the sides, a strap arrangement having shoulder straps extending downwardly from an upper extent of the back portion with a rigid locking tongue at the lower extent thereof removably positionable in a locking element in the forward extent of the seat frame. A bar arrangement having an upper horizontal bar coupled to the back of the back portion at an upper extent and a lower horizontal bar coupled with respect to the area of joining between the seat portion and leg portion and an intermediate horizontal bar therebetween with laterally extending bars at the edges of the upper and intermediate bars and at the edges of the intermediate and lower bars.

US 2007/0108812 A1 regards a method and apparatus for seating two or more small children in a safe and comfortable manner in a reduced seating footprint. Through the use of a reduced seating footprint, parents can utilize safer, smaller and more fuel-efficient vehicles such that the financial burden associated with owning and operating larger vehicles can be foregone. The seating assembly can include a unitary seating frame having two or more seating portions operatively connected to the seating frame. The seating assembly can further include a utility bin that operably attaches to the unitary seating frame.

DE 202011104786 U1 relates to an extension portion for extending more than one external dimension of a child safety seat and thereby increasing the extent to which a seat occupant is shielded and/or limiting the extent of potential occupant excursion. A child safety seat assembly comprising an extension portion is also disclosed.

DE 10 2015 214 910 A1 relates to a side protection mechanism for a child seat, where the side guard mechanism is disposed on a side wing of the child seat. The side protection mechanism includes a side protection block and a protection component. One end of the side protection block is pivotable to the side wing. The side protection block is movable between an insertion position and a folding position. The protective component is slidably disposed on the other end of the side protection block. The protection component protrudes from one side of the side protection block and is disposed between the side wings and the side protection block when the side protection block is pivoted away from the side wing and located at the deployed position, and the protection component is received in the side of the side protection block when the side protection block pivoted to the side wing and arranged at the folding position.

It is an object of the present invention to minimize and possibly alleviate one or more of the disadvantages of the prior art, or to provide a useful alternative.

A further object of the present invention is to provide a child safety seat which can be adapted to and installed correctly in the vehicle, enabling more than one child safety seat to be accommodated in the vehicle and which offers an easy installation of the one or more child safety seats in the vehicle, at the same time as minimizing the risk for incorrect use.

These objects are achieved by a child safety seat, a system and a method according to the following independent claims, with additional embodiments set forth in the dependent claims.

The present invention relates to a child safety seat for use in a vehicle, where the child safety seat comprises a sitting section, a back section and a head section, where the back section is provided with side wings and wherein the child safety seat further comprises at least one detachable side element being releasably connected to the child safety seat, where each detachable side element is provided with a first interface for connection with complementary interface(s) provided on the child safety seat, and a second interface for connection with a complementary interface provided on an energy absorbing element.

The child safety seat is preferably provided with a complementary interface on both of its sides, but it should be understood that the child safety seat may be provided with only one complementary interface, where the complementary interface then can be provided on either a left side or a right side of the child safety seat.

The child safety seat comprises further fastening means for fastening the child safety seat to a vehicle seat, where the fastening means for fastening the child safety seat to the vehicle seat child safety seat may be in the form of Isofix connectors and/or the child safety seat may be provided with a seat belt guiding structure, such as one or more guiding grooves, slit(s), surface(s), hook(s) or the like over its surface, such that a three-point seat belt can be arranged in or over the one or more guiding grooves, slits, surfaces or hooks, in order to fasten the child safety seat to the vehicle seat.

Furthermore, the child safety seat may be provided to be adjustable between at least two positions, for instance a reclined position and an upright position, where the reclined position is used when the child safety seat is to sleep or is already sleeping. A person skilled in the would know how this can be done, whereby this is not described any further herein.

In one embodiment of the present invention, the child safety seat is to be connected to corresponding anchoring means provided in the vehicle seat of the vehicle, whereby two Isofix connectors are connected to a frame structure of the child safety seat. The Isofix connectors are connected to the frame structure of the child safety seat spaced apart, i.e. with a distance between them, and the Isofix connectors may be arranged fixedly to the frame structure, such that they cannot move relative to the frame structure, or the Isofix connectors may be arranged to be adjustable relative the child safety seat, such that the Isofix connectors can be extended from or retracted into the frame structure of the child safety seat, such that the child safety seat can be adapted to different models of vehicles, as vehicle seats, and/or anchorage points can vary greatly between the vehicle models.

Furthermore, the Isofix connectors may also be pivotable relative the frame structure, such that they can be adapted to different inclination of the sitting section of the vehicle seat.

One end of such an Isofix connector comprises a latch or a clip that will engage with anchorage points in the vehicle seat. As these latches and anchorage points are used as standards, a person skilled in the art will know how these are or can be designed, whereby this will not be described further herein.

A person skilled in the art would know that the child safety seat according to the present invention could also be designed to be used with safety seat belt provided in the vehicle, whereby the child safety seat would be provided with at least one belt guiding structure for a seat belt portion of the vehicle safety seat belt. The belt guiding structure could be, for instance, in the form of one or more guiding grooves, slits, surfaces or hooks.

The child safety seat according to the present invention may, on each side of the child safety seat, when the child safety seat is seen from front or behind, be provided with a groove or a slit for reception of the detachable side element. The groove or slit may then have a bent form, where the groove or slit may extend from a back of the child safety seat, over at least a part of a longitudinal length of the side wing of the child safety seat and then back again to the back of the child safety seat. The detachable side element will have a corresponding form. Furthermore, the part of the groove or slit that extends over the longitudinal length of the side wing may be shaped or designed to be within a width of the side wing, when the child safety seat is seen from side, such that when the detachable side element is connected to the child safety seat, the detachable side element will not extend past or beyond a width of the side wing.

The first interface provided on the detachable side element may comprise a plurality of apertures for fastening means, where the fastening means may be in the form of screws, bolts, nuts, hooks, springs, snap fits or the like. A plurality of cooperating or corresponding apertures are then provided at the side wings and the back of the child safety seat, in the groove or slit, whereby the detachable side element, through the fastening means, can be connected to the child safety seat. A person skilled in the art would know that, instead of the detachable side element and the child safety seat being provided with a cooperating or corresponding plurality of apertures, the detachable side element and the child safety seat may be provided with a number of cooperating or corresponding "male and female" connectors in order to connect together the detachable side element and the child safety seat. Alternatively, the detachable side element and the child safety seat could be provided with both apertures and "male or female" connectors in order to ease the installation of the detachable side element.

In one embodiment, the first interface of the detachable side element may comprise at least one female connector in the form of a slit or groove, and where each of the complementary interfaces provided in the child safety seat comprises at least one corresponding male connector in the form of a protruding element. However, it should be understood that the child safety seat could be provided with at least one female connector, whereby the detachable side element then will be provided with at least one corresponding male connector in the form of a protruding element.

The plurality of apertures or the "male and female" connectors may be provided in groups over the length of the groove or slit, where, for instance, a group may be arranged towards a top of the back of the child safety seat, a group may be arranged towards a bottom of the back of the child safety seat and a group may be arranged within an area of the side wing of the child safety seat, on an outer surface of the side wing, such that the detachable side element can be connected to the child safety seat at each end and at the middle of the detachable side element.

The detachable side element may comprise a core of an energy absorbing material and a bottom part, where the core and the bottom part are enveloped by a plastic material. The core and the bottom part, which may be made of a stiffer material, may be bonded to each other in order to form a stiff construction.

The present invention also relates to a system comprising at least two child safety seats, where each child safety seat comprises a sitting section, a back section and a head section, where the back section is provided with side wings, wherein each child safety seat further comprises at least one detachable side element, where each detachable side element is provided with a first interface for connection with at least one complementary interface provided on the child safety seat, and a second interface for connection with a complementary interface provided on an energy absorbing element.

The system according to the present invention may in one embodiment comprise a third child safety seat, the third child safety seat being arranged between the two child safety seats and being without the at least one detachable side element.

The present invention also relates to a method for installation of at least two child safety seat in a vehicle, where the method may comprise the following steps:
- arranging one child safety seat at each side of a back seat of a vehicle,
- detaching and removing a detachable side element on a side of the child safety seat facing the other child safety seat of at least one of the child safety seats, and
- fastening each child safety seat with Isofix connectors to anchorage points provided in the vehicle seat or with a seat belt of the vehicle.

The method for installation of at least two child safety seats in a vehicle may further comprise the step:
- arranging a third child safety seat either forward facing or backward facing between the two child safety seats arranged at each side of the back seat of the vehicle, and fastening the third child safety seat with Isofix connectors to anchorage points provided in the vehicle seat or with a seat belt of the vehicle.

The method for installation of at least two child safety seats in a vehicle may also comprise the step of attaching an energy absorbing element to the detachable side element of each the child safety seat facing a door of the vehicle.

The foregoing and other features of the present invention will become apparent to one skilled in the art to which the present invention relates upon consideration of the following description of the invention with reference to the accompanying drawings, wherein:
Figure 1 shows a child safety seat according to the present invention,
Figure 2 shows in greater detail a part of the child safety seat according to figure 1,
Figures 3A-3B show a child safety seat according to figure 1 installed in a vehicle seat of a vehicle, while figure 3C shows in greater detail a part of the child safety seat according to figure 1,
Figures 4A-4C show how two child safety seats according to the present invention can be installed in a vehicle seat of a vehicle,
Figures 5A-5B show how an additional and third child safety seat according to the present invention can be installed in a vehicle seat of a vehicle,
Figures 6A-6B show a first embodiment of interfaces provided on a detachable side element and the child safety seat according to the present invention, where figure 6A is a perspective view from front and figure 6B is a perspective view from back, and
Figures 7A-7B show a second embodiment of interfaces provided on a detachable side element and the child safety seat according to the present invention, where figure 7A is a perspective view from front and figure 7B is a perspective view from back.

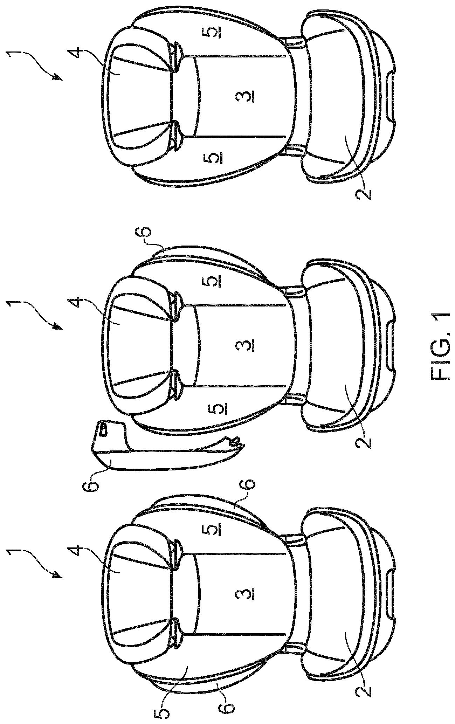

Figure 1 shows a child safety seat 1 according to the present invention, where it can be seen that the child safety seat 1 comprises a sitting section 2, a back section 3 and a head section 4. A side wing 5 is arranged on each side of the child safety seat 1, where each side wing 5 extends out from the back section 3 of the child safety seat 1, such that the side wings 5 provide a lateral protection and support for an upper body of a child seated in the child safety seat 1 in the event of a side collision of a vehicle (not shown).

The head section 4 is arranged to be adjustable in a height direction of the child safety seat 1, such that the child safety seat 1 can be adapted correctly to the size of the child. As a person skilled in the art would know how the head section 4 could be designed to be adjustable, this is not described any further herein.

A detachable side element 6 is connected to each side of the child safety seat 1, when seen the child safety seat 1 from front, where each detachable side element 6 is provided with a first interface 7 for connection with a complementary interface 8 provided on each side of the child safety seat 1.

The left figure shows how a detachable side element 6 is connected to each side of the child safety seat 1, the figure in the middle shows how the detachable side element 6 on the left side of the child safety seat 1 is removed from the child safety seat 1 and the right figure shows that both the left and right detachable side element 6 has been removed from the child safety seat 1.

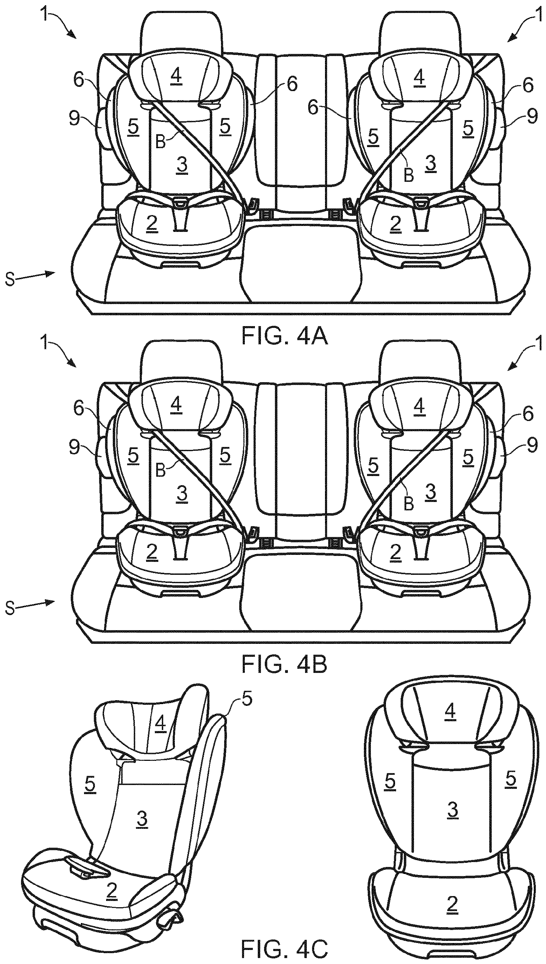

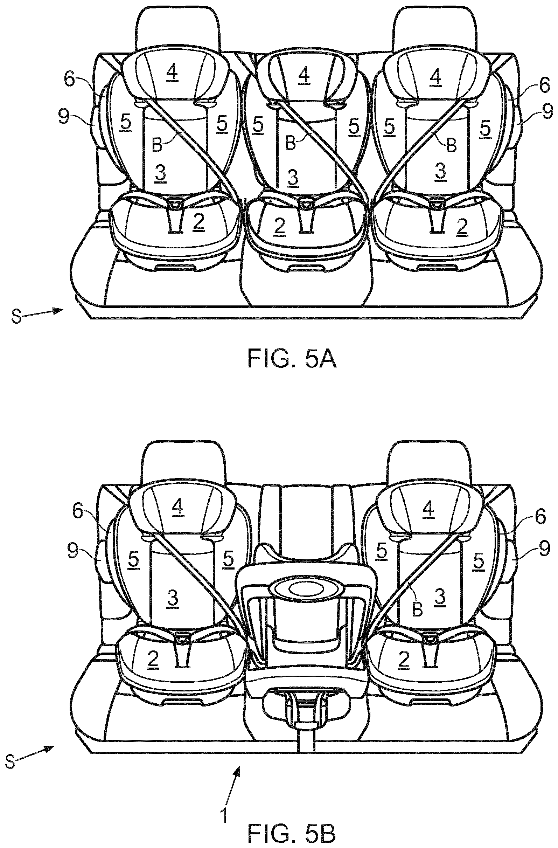

Such a design or shape of the child safety seat 1 will allow a width of the child safety seat 1 to be reduced in certain cases, thereby allowing, for instance, two such child safety seats 1 to be installed in a vehicle seat of a vehicle and at the same time providing enough space between the two child safety seats 1, so that an adult person can sit between the child safety seats 1, or to allow an additional and third child safety seat 1 to be installed between the two child safety seats 1, as can be seen in figures 4A-4C and/or figures 5A-5B.

The first interface 7 provided on the detachable side element 6 may comprise a plurality of apertures for fastening means, where the fastening means may be in the form of screws, bolts, nuts, hooks, springs, snap fits or the like. A plurality of cooperating or corresponding apertures are then provided at the side wings 5 and the back of the child safety seat 1, in the groove or slit, whereby the detachable side element 6 can be connected to the child safety seat 1. A person skilled in the art would know that, instead of the detachable side element 6 and the child safety seat 1 being provided with a cooperating or corresponding plurality of apertures, the detachable side element 6 and the child safety seat 1 may be provided with a number of cooperating or corresponding "male and female" connectors in order to connect together the detachable side element 6 and the child safety seat 1. Alternatively, the detachable side element 6 and the child safety seat 1 could be provided with both apertures and "male or female" connectors in order to ease the installation of the detachable side element 6.

The first interface 7 provided on the detachable side element 6 comprises a plurality of apertures in order to be able to be connected to the complementary interface 8 provided on each side of the child safety seat 1, whereby the detachable side element 6 can be connected and fixed to the child safety seat 1 by means of screws, bolts, nuts or the like. The child safety seat 1 is then provided with a corresponding number of apertures at the side wings 5 and the back of the child safety seat 1.

It could also be envisaged that the detachable side element 6 and the child safety seat 1 can be provided with a plurality of cooperating and corresponding "male and female" connectors in order to connect the detachable side element 6 and the child safety seat 1 together.

In one embodiment of the present invention, the detachable side element 6 is provided with at least one female connector in the form of a slit or groove, and the child safety seat 1 is provided with at least one corresponding male connector in the form of a protrusion element. Alternatively, the detachable side element 6 could be provided with at least one corresponding male connector, whereby the child safety seat 1 is provided with at least one corresponding female connector.

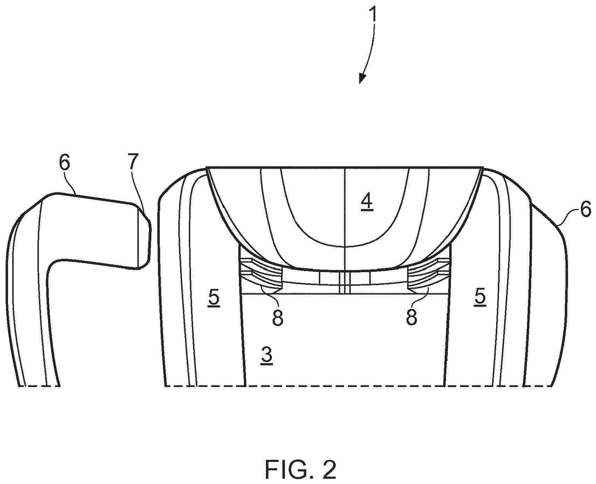

Figure 2 shows an upper part of the child safety seat 1 according to figure 1, where the connection between the detachable side element 6 and the child safety seat 1 is shown in greater detail.

In this embodiment, the first interface 7 of the detachable side element 6 is in the form of at least one male connector, while the interface 8 of the child safety seat 1 is provided with a corresponding number of female connector(s) 8. As can be seen, both the left side and the right side of the child safety seat 1 is provided with the interface 8. This arrangement will allow either the left, the right or both the detachable side elements 6 to be detached and removed from the child safety seat 1, thus decreasing the width of the child safety seat 1. Similarly, the width of the child safety seat 1 may be increased by connecting and locking one or both of the detachable side elements 6 to the child safety seat 1.

However, a person skilled in the art would know that the first interface 7 of the detachable side element 6 can be in the form of a female connector, while the interface 8 of the child safety seat 1 then is provided with a corresponding male connector 8.

In figure 2 only the upper first interface 7 of the detachable side element 6 and the corresponding upper interfaces 8 of the child safety seat 1 are shown, but it should be understood that both the detachable side element 6 and the child safety seat 1 are provided with additional and not shown corresponding interfaces 7, 8, where the first interfaces 7 further are provided at the middle and at the lower part of the detachable side element 6, and where corresponding interfaces 8 are provided in the child safety seat 1.

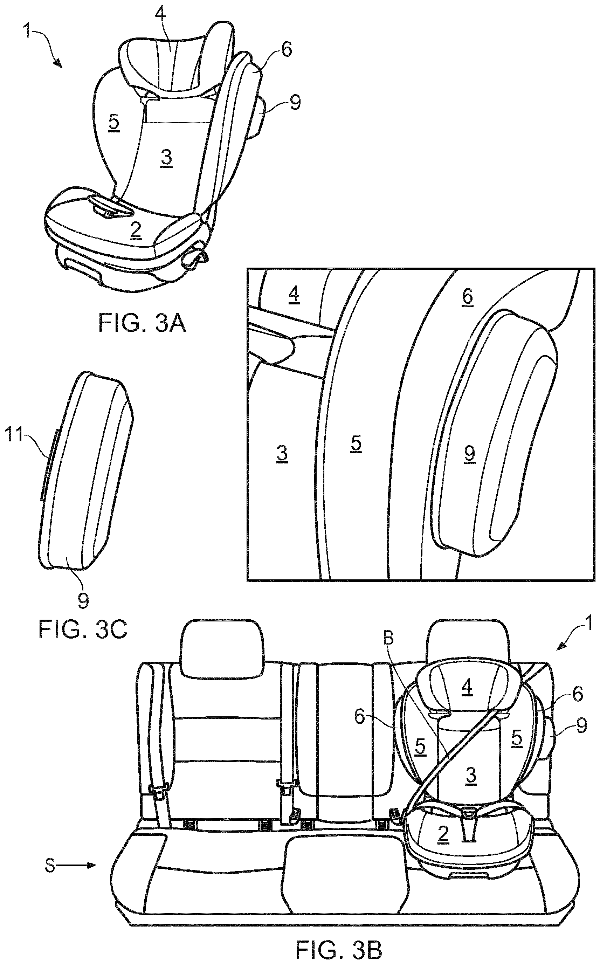

Figures 3A-3B show how a single child safety seat 1 according to the present invention is installed in a vehicle seat S of a vehicle (not shown). The child safety seat 1 according to the present invention is fixed in the vehicle seat S by use of a vehicle safety belt B, where the vehicle safety belt B is guided through guiding grooves or slits provided in the child safety seat 1.

As only one child safety seat 1 is installed in the vehicle the detachable side elements 6 connected to the sides of the child safety seat 1 are not removed. Instead, an additional energy-absorbing element 9 is connected to the detachable side element 6 which is arranged on the right side of the child safety seat 1, in order to provide additional security in the event of a side collision with the vehicle. The additional energy-absorbing element 9 will then be arranged between a vehicle door (not shown) and the detachable side element 6.

The detachable side element 6 is then provided with a second interface 10 on an opposite side of the first interface 7, and the additional energy-absorbing element 9 is provided with a complementary interface 11 on a side facing the detachable side element 6.

The additional energy absorbing element 9 is shown in greater detail in figure 3C, where it can be seen that the additional energy absorbing element 9 is provided, on the side that faces the detachable side element 6, when the two elements are to be connected to each other, with the complementary interface 11 in the form of at least one female connector, the female connector being a slit or groove, and the detachable side element 6 is provided with at least one corresponding male connector. Alternatively, the additional energy-absorbing element 9 could be provided with at least one male connector, whereby the detachable side element 6 then is provided with at least one corresponding female connector.

The additional energy-absorbing element 9 comprises then a core of an energy absorbing material, and is further enveloped by a plastic material. A person skilled in the art would know how such an energy-absorbing element 9 should be designed or formed, whereby this is not described any further herein.

As can be seen from figures 3A-3C, the child safety seat 1 is, on each side of the child safety seat 1, provided with a groove or slit for reception of a detachable side element 6, where the groove or slit will extend from a back side of the child safety seat 1, around transition between the back section 3 and the side wing 5, further along at least a part of a longitudinal length of the side wing 5 and then back again, over the transition between the back section 3 and the side wing 5, to the back 3 of the child safety seat 1.

The detachable side element 6 will have a corresponding form.

Furthermore, the grooves or slits are arranged in such a way that, when the detachable side element 6 is connected to the child safety seat 1, the detachable side element 6 will not extend past or beyond the side wing 5.

Figures 4A-4C show how two child safety seats 1 according to the present invention can be installed in the vehicle seat S, in order to provide a space between the two child safety seats 1 for an adult person.

In figure 4A one child safety seat 1 is arranged and installed on opposite ends of the vehicle seat S, where an additional energy-absorbing element 9 is connected through its interface 11 to the second interface 10 of the detachable element 6, each of the additional energy-absorbing elements 9 being connected to the detachable side element 6 arranged on a side of the child safety seat 1 facing a vehicle door (not shown). Such an arrangement of the two child safety seats 1 will provide a space between the child safety seats leven though the detachable side elements 6 arranged on a side of the child safety seats 1 facing each other are not detached and removed from the child safety seat 1.

However, if this space between the two child safety seats 1 is not enough for an adult person to be seated between the child safety seats 1, one or both of the two detachable side elements 6 facing each other can be removed, as shown in figure 4B, thereby providing even more space between the two child safety seats 1, as removal of the detachable side elements 6 will result in that the space or distance between the child safety seats 1 is increased by the thickness or the width of the detachable side element(s) 6.

In figure 4C is shown a child safety seat 1 where each of the detachable side elements 6 are detached and removed away from the child safety seat.

However, it should be understood that the two child safety seats 1 also could be arranged and installed adjacent each other. The detachable side elements 6 facing each other could then be kept connected to their respective child safety seats 1, or one or both of the two detachable side elements 6 could be removed in order to provide more space in the vehicle seat for a person to be seated in the vehicle seat.

Figures 5A-5B show how three child safety seats can be arranged and installed in the vehicle seat S, where figure 5A shows how an additional and third child safety seat 1 can be arranged between the two child safety seats 1 as explained in accordance with figure 4B, as detachment and removal of the two detachable side elements 6 facing each other will provide enough space between the two child safety seats arranged on each side of the vehicle seat S for the additional and third child safety seat 1 to be arranged between these.

The additional and third child safety seat 1 may be installed in a forward-facing position, as shown in figure 5A, or in a rearward facing position, as shown in figure 5B.

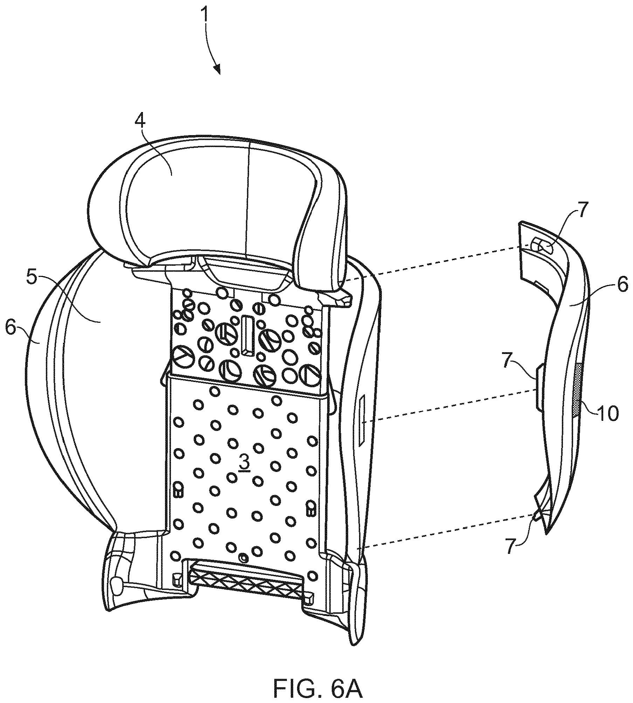

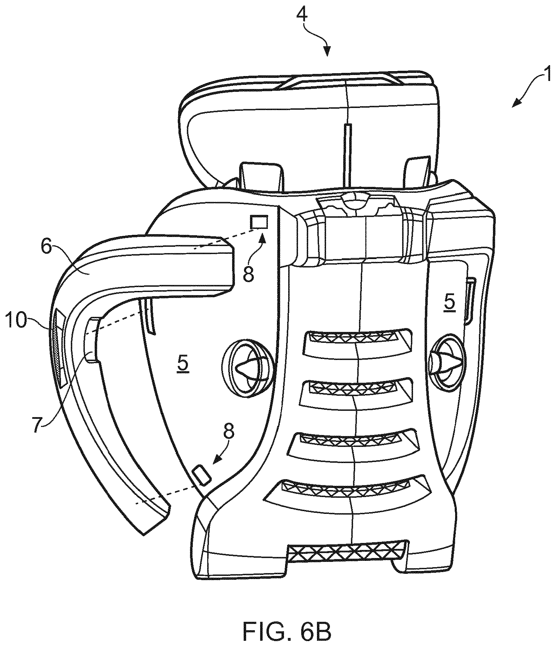

Figures 6A-6B show, according to a first embodiment, how the detachable side elements 6 can be connected to the child safety seat 1, in a perspective view from front (figure 6A) and from back (figure 6B), where it can be seen that the detachable side element 6 is provided with a first interface 7 and the child safety seat 1 is provided with a complementary interface 8. The first interface 7 of the detachable side element 6 comprises a male connector 7 provided in an end area of each end of the detachable side element 6 and in an area at middle of the detachable side element 6, and where the child safety seat 1 is provided with a corresponding female connector at an upper and lower side of the back of the child safety seat 1 and a female connector in each of the side wings 3.

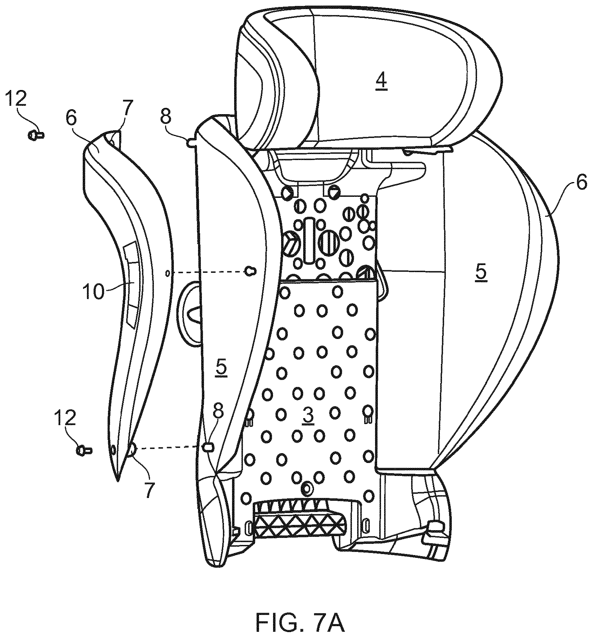

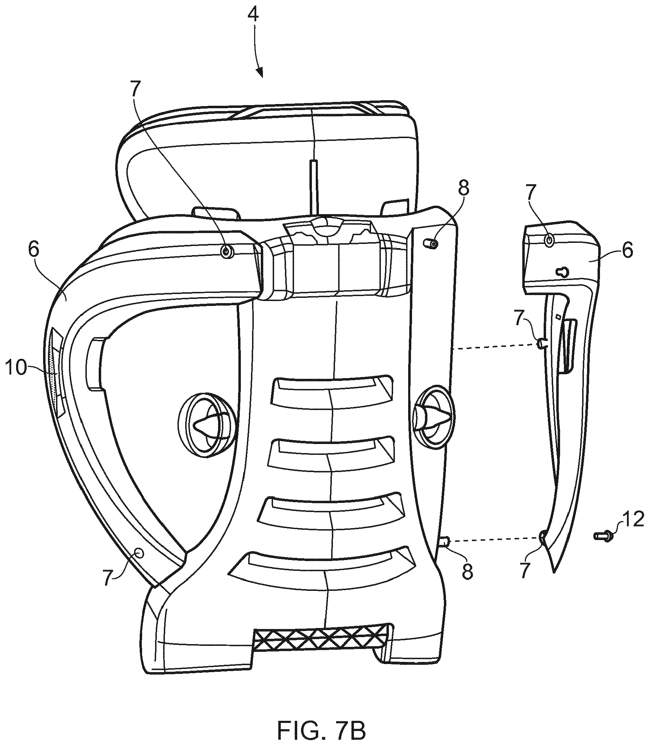

Figures 7A-7B show, according to a second embodiment, how the detachable side elements 6 can be connected to the child safety seat 1, in a perspective view from front (figure 7A) and from back (figure 7B), where it can be seen that the detachable side element 6 is provided with a first interface 7 and the child safety seat 1 is provided with a complementary interface 8. The first interface 7 of the detachable side element 6 comprises an aperture 7 provided in an end area of each end of the detachable side element 6 and in an area at middle of the detachable side element 6, and where the child safety seat 1 is provided with a corresponding aperture 8 at an upper and lower side of the back of the child safety seat 1 and an aperture 8 in each of the side wings 3. Screws 12 can then be used to connect the detachable side element and the child safety seat 1.

The invention has now been explained with different embodiments. Only elements related to the invention are described and a skilled person will understand that one may make several alterations and modifications to the described and shown embodiments that are within the scope of the invention as defined in the following claims.

## Claims

1. A child safety seat (1) for a vehicle, the child safety seat (1) comprising a sitting section (2), a back section (3) and a head section (4), the back section (3) being provided with side wings (5), **characterized in that** the child safety seat (1) further comprises at least one detachable side element (6), where each detachable side element (6) is provided with a first interface (7) for connection with a complementary interface (8) provided on the child safety seat (1), and a second interface (10) for a connection with an energy absorbing element (9).

2. Child safety seat (1) according to claim 1, **characterized in that** the child safety seat (1) comprises two Isofix connectors.

3. Child safety seat (1) according to claim 1, **characterized in that** the child safety seat (1) is provided with at least one belt guiding structure for a seat belt portion of a seat belt.

4. Child safety seat (1) according to claim 1, **characterized in that** each detachable side element (6), when connected to the child safety seat (1), covers at least a part of a side wing (5) and the back section (3) of the child safety seat (1).

5. Child safety seat (1) according to claim 1, **characterized in that** the detachable side element (6) comprises a core of an energy absorbing material and a bottom part enveloped by a plastic material.

6. Child safety seat (1) according to any one of the proceeding claims 1-5, **characterized in that** the first interface (7) of the detachable side element (6) comprises a plurality of apertures for fastenings means in the form of screws, bolts, nuts or the like.

7. Child safety seat (1) according to claim 6, **characterized in that** the plurality of apertures are provided in an area towards one end, towards both ends, or over the whole length of the detachable side element (6).

8. Child safety seat (1) according to any one of the proceeding claims 1-5, **characterized in that** the first interface (7) of the detachable side element (6) comprises at least one female connection in the form of a slit or groove, and where each of the first and second complementary interfaces on the child safety seat (1) comprises at least one male connection in the form of a protrusion element.

9. Child safety seat (1) according to any one of the proceeding claims 1-5, **characterized in that** the first interface (7) of the detachable side element (6) comprises at least one male connection in the form of a protrusion element, and where each of the first and second complementary interfaces on the child safety seat (1) comprises at least one female connection in the form of a slit or groove.

10. Child safety seat (1) according to claim 1, **characterized in that** the second interface (10) of the detachable side element (6) comprises at least one female connection in the form of a slit or groove.

11. Child safety seat (1) according to claim 1, **characterized in that** the second interface (10) of the detachable side element (6) comprises at least one male connection in the form of a protrusion element.

12. Child safety seat (1) according to claim 1, **characterized in that** the energy absorbing element (9) comprises a crushable material enveloped by a plastic material.

13. A system comprising at least two child safety seats (1) for a vehicle, each child safety seat (1) comprising a sitting section (2), a back section (3) and a head section (4), the back section (3) being provided with side wings (5), **characterized in that** the child safety seat (1) further comprises at least one detachable side element (6), where each detachable side element (6) is provided with a first interface (7) for connection with a first or second complementary interface provided on the child safety seat (1), and a second interface (10) for connection with an energy absorbing element (9).

14. System according to claim 13, **characterized in that** the system comprises a third child safety seat without the at least one detachable side element (6) arranged between the two child safety seats (1).

15. A method for installation of at least two child safety seats (1) in a vehicle, the method comprising the following steps:
- arranging one child safety seat (1) at each side of a back seat of a vehicle,
- detaching and removing a detachable side element (6) on a side of the child safety seat (1) facing the other child safety seat (1) of at least one of the child safety seats (1), and
- fastening each child safety seat (1) with Isofix connectors to anchorage points in the vehicle or with a seat belt of the vehicle.

16. A method for installation of at least two child safety seats (1) in a vehicle according to claim 15, where the method further comprises the step of attaching an energy absorbing element (9) to the detachable side element (6) of each child safety seat (1) facing a door of the vehicle.

17. A method for installation of at least two child safety seats (1) according to any one of the proceeding claims 15-16, where the method further comprises the step of arranging a third child safety seat between the two child seats (1) arranged at each side of the back seat of the vehicle.

## Patentansprüche

1. Sicherheits-Kindersitz (1) für ein Fahrzeug, wobei der Sicherheits-Kindersitz (1) einen Sitz-Teilabschnitt (2), einen Lehnen-Teilabschnitt (3) sowie einen Kopf-Teilabschnitt (4) umfasst, der Lehnen-Teilabschnitt (3) mit seitlichen Flügeln (5) versehen ist, **dadurch gekennzeichnet, dass** der Sicherheits-Kindersitz (1) des Weiteren wenigstens ein abnehmbares Seitenelement (6) umfasst, wobei jedes abnehmbare Seitenelement (6) mit einer ersten Grenzfläche (7) zur Verbindung mit einer komplementären Grenzfläche (8), die an dem Sicherheits-Kindersitz (1) vorhanden ist, sowie einer zweiten Grenzfläche (10) für eine Verbindung mit einem energieabsorbierenden Element (9) versehen ist.

2. Sicherheits-Kindersitz (1) nach Anspruch 1, **dadurch gekennzeichnet, dass** der Sicherheits-Kindersitz (1) zwei Isofix-Verbinder umfasst.

3. Sicherheits-Kindersitz (1) nach Anspruch 1, **dadurch gekennzeichnet, dass** der Sicherheits-Kindersitz (1) mit wenigstens einer Gurtführungs-Struktur für einen Sicherheitsgurtabschnitt eines Sicherheitsgurtes versehen ist.

4. Sicherheits-Kindersitz (1) nach Anspruch 1, **dadurch gekennzeichnet, dass** jedes abnehmbare Seitenelement (6), wenn es mit dem Sicherheits-Kindersitz (1) verbunden ist, wenigstens einen Teil eines seitlichen Flügels (5) und des Lehnen-Teilabschnitts (3) des Sicherheits-Kindersitzes (1) abdeckt.

5. Sicherheits-Kindersitz (1) nach Anspruch 1, **dadurch gekennzeichnet, dass** das abnehmbare Seitenelement (6) einen Kern aus einem energieabsorbierenden Material und einen von einem Kunststoffmaterial umhüllten unteren Teil umfasst.

6. Sicherheits-Kindersitz (1) nach einem der vorangehenden Ansprüche 1-5, **dadurch gekennzeichnet, dass** die erste Grenzfläche (7) des abnehmbaren Seitenelementes (6) eine Vielzahl von Öffnungen für Befestigungseinrichtungen in Form von Schrauben, Bolzen, Muttern oder dergleichen umfasst.

7. Sicherheits-Kindersitz (1) nach Anspruch 6, **dadurch gekennzeichnet, dass** die Vielzahl von Öffnungen in einem Bereich zu einem Ende hin, zu beiden Enden hin oder über die gesamte Länge des abnehmbaren Seitenelementes (6) vorhanden sind.

8. Sicherheits-Kindersitz (1) nach einem der vorangehenden Ansprüche 1-5, **dadurch gekennzeichnet, dass** die erste Grenzfläche (7) des abnehmbaren Seitenelementes (6) wenigstens eine Aufnahme-Verbindung in Form eines Schlitzes oder einer Nut umfasst, und jede von der ersten und der zweiten komplementären Grenzfläche an dem Sicherheits-Kindersitz (1) wenigstens eine Einführ-Verbindung in Form eines Vorsprungselementes umfasst.

9. Sicherheits-Kindersitz (1) nach einem der vorangehenden Ansprüche 1-5, **dadurch gekennzeichnet, dass** die erste Grenzfläche (7) des abnehmbaren Seitenelementes (6) wenigstens eine Einführ-Verbindung in Form eines Vorsprungselementes umfasst, und jede von der ersten und zweiten komplementären Grenzfläche an dem Sicherheits-Kindersitz (1) wenigstens eine Aufnahme-Verbindung in Form eines Schlitzes oder einer Nut umfasst.

10. Sicherheits-Kindersitz (1) nach Anspruch 1, **dadurch gekennzeichnet, dass** die zweite Grenzfläche (10) des abnehmbaren Seitenelementes (6) wenigstens eine Aufnahme-Verbindung in Form eines Schlitzes oder einer Nut umfasst.

11. Sicherheits-Kindersitz (1) nach Anspruch 1, **dadurch gekennzeichnet, dass** die zweite Grenzfläche (10) des abnehmbaren Seitenelementes (6) wenigstens eine Einführ-Verbindung in Form eines Vorsprungselementes umfasst.

12. Sicherheits-Kindersitz (1) nach Anspruch 1, **dadurch gekennzeichnet, dass** das energieabsorbierende Element (9) ein knautschfähiges Material umfasst, das von einem Kunststoffmaterial umhüllt ist.

13. System, das wenigstens zwei Sicherheits-Kindersitze (1) für ein Fahrzeug umfasst, wobei jeder Sicherheits-Kindersitz (1) einen Sitz-Teilabschnitt (2), einen Lehnen-Teilabschnitt (3) sowie einen Kopf-Teilabschnitt (4) umfasst, der Lehnen-Teilabschnitt (3) mit seitlichen Flügeln (5) versehen ist, **dadurch gekennzeichnet, dass** der Sicherheits-Kindersitz (1) des Weiteren wenigstens ein abnehmbares Seitenelement (6) umfasst, wobei jedes abnehmbare Seitenelement (6) mit einer ersten Grenzfläche (7) zur Verbindung mit einer ersten oder einer zweiten komplementären Grenzfläche, die an dem Sicherheits-Kindersitz (1) vorhanden ist, und einer zweiten Grenzfläche (10) zur Verbindung mit einem energieabsorbierenden Element (9) versehen ist.

14. System nach Anspruch 13, **dadurch gekennzeichnet, dass** das System einen dritten Sicherheits-Kindersitz ohne das wenigstens eine abnehmbare Seitenelement (6) umfasst, der zwischen den zwei Sicherheits-Kindersitzen (1) angeordnet ist.

15. Verfahren zum Einbau von wenigstens zwei Sicherheits-Kindersitzen (1) in ein Fahrzeug, wobei das Verfahren die folgenden Schritte umfasst:
Anordnen eines Sicherheits-Kindersitzes (1) auf jeder Seite eines Rücksitzes eines Fahrzeugs sowie Abnehmen und Entfernen eines abnehmbaren Seitenelementes (6) an einer Seite des Sicherheits-Kindersitzes (1), die dem anderen Sicherheits-Kindersitz (1) von wenigstens einem der Sicherheits-Kindersitze (1) zugewandt ist, sowie
Befestigen jedes Sicherheits-Kindersitzes (1) mit Isofix-Verbindern an Verankerungspunkten in dem Fahrzeug oder mit einem Sicherheitsgurt des Fahrzeugs.

16. Verfahren zum Einbau von wenigstens zwei Sicherheits-Kindersitzen (1) in ein Fahrzeug nach Anspruch 15, wobei das Verfahren des Weiteren den Schritt des Anbringens eines energieabsorbierenden Elementes (9) an dem abnehmbaren Seitenelement (6) jedes Sicherheits-Kindersitzes (1) umfasst, das einer Tür des Fahrzeugs zugewandt ist.

17. Verfahren zum Einbau von wenigstens zwei Sicherheits-Kindersitzen (1) nach einem der vorangehenden Ansprüche 15-16, wobei das Verfahren des Weiteren den Schritt des Anordnens eines dritten Sicherheits-Kindersitzes zwischen den zwei Kindersitzen (1) umfasst, die an jeder Seite des Rücksitzes des Fahrzeugs angeordnet sind.

## Revendications

1. Siège de sécurité pour enfant (1) pour un véhicule, le siège de sécurité pour enfant (1) comprenant une section d'assise (2), une section de dossier (3) et une section de tête (4), la section de dossier (3) étant dotée d'ailes latérales (5), **caractérisé en ce que** le siège de sécurité pour enfant (1) comprend, en outre, au moins un élément latéral détachable (6), où chaque élément latéral détachable (6) est doté d'une première interface (7) pour le raccordement à une interface complémentaire (8) prévue sur le siège de sécurité pour enfant (1), et une deuxième interface (10) pour un raccordement à un élément d'absorption d'énergie (9).

2. Siège de sécurité pour enfant (1) selon la revendication 1, **caractérisé en ce que** le siège de sécurité pour enfant (1) comprend deux raccords Isofix.

3. Siège de sécurité pour enfant (1) selon la revendication 1, **caractérisé en ce que** le siège de sécurité pour enfant (1) est doté d'au moins une structure de guidage de ceinture pour une portion de ceinture de siège d'une ceinture de siège.

4. Siège de sécurité pour enfant (1) selon la revendication 1, **caractérisé en ce que** chaque élément latéral détachable (6), lorsqu'il est raccordé au siège de sécurité pour enfant (1), couvre au moins une partie d'une aile latérale (5) et la section de dossier (3) du siège de sécurité pour enfant (1).

5. Siège de sécurité pour enfant (1) selon la revendication 1, **caractérisé en ce que** l'élément latéral détachable (6) comprend un noyau d'un matériau d'absorption d'énergie et une partie de fond enveloppée par un matériau plastique.

6. Siège de sécurité pour enfant (1) selon l'une quelconque des revendications précédentes 1 à 5, **caractérisé en ce que** la première interface (7) de l'élément latéral détachable (6) comprend une pluralité d'ouvertures pour fixer des moyens sous la forme de vis, boulons, écrous ou similaires.

7. Siège de sécurité pour enfant (1) selon la revendication 6, **caractérisé en ce que** la pluralité d'ouvertures sont prévues dans la zone vers une extrémité, vers les deux extrémités, ou sur toute la longueur de l'élément latéral détachable (6).

8. Siège de sécurité pour enfant (1) selon l'une quelconque des revendications précédentes 1 à 5, **caractérisé en ce que** la première interface (7) de l'élément latéral détachable (6) comprend au moins un raccordement femelle sous la forme d'une fente ou rainure, et où chacune des première et deuxième interfaces complémentaires sur le siège de sécurité pour enfant (1) comprend au moins un raccordement mâle sous la forme d'un élément faisant saillie.

9. Siège de sécurité pour enfant (1) selon l'une quelconque des revendications précédentes 1 à 5, **caractérisé en ce que** la première interface (7) de l'élément latéral détachable (6) comprend au moins un raccordement mâle sous la forme d'un élément faisant saillie, et où chacune des première et deuxième interfaces complémentaires sur le siège de sécurité pour enfant (1) comprend au moins un raccordement femelle sous la forme d'une fente ou rainure.

10. Siège de sécurité pour enfant (1) selon la revendication 1, **caractérisé en ce que** la deuxième interface (10) de l'élément latéral détachable (6) comprend au moins un raccordement femelle sous la forme d'une fente ou rainure.

11. Siège de sécurité pour enfant (1) selon la revendication 1, **caractérisé en ce que** la deuxième interface (10) de l'élément latéral détachable (6) comprend au moins un raccordement mâle sous la forme d'un élément faisant saillie.

12. Siège de sécurité pour enfant (1) selon la revendication 1, **caractérisé en ce que** l'élément d'absorption d'énergie (9) comprend un matériau apte à l'écrasement enveloppé par un matériau plastique.

13. Système comprenant au moins deux sièges de sécurité pour enfant (1) pour un véhicule, chaque siège de sécurité pour enfant (1) comprenant une section d'assise (2), une section de dossier (3) et une section de tête (4), la section de dossier (3) étant dotée d'ailes latérales (5), **caractérisé en ce que** le siège de sécurité pour enfant (1) comprend, en outre, au moins un élément latéral détachable (6), où chaque élément latéral détachable (6) est doté d'une première interface (7) pour raccordement à une première ou deuxième interface complémentaire prévue sur le siège de sécurité pour enfant (1), et une deuxième interface (10) pour raccordement à un élément d'absorption d'énergie (9).

14. Système selon la revendication 13, **caractérisé en ce que** le système comprend un troisième siège de sécurité pour enfant sans le au moins un élément latéral détachable (6) agencé entre les deux sièges de sécurité pour enfant (1).

15. Procédé pour l'installation d'au moins deux sièges de sécurité pour enfant (1) dans un véhicule, le procédé comprenant les étapes suivantes :
- agencement d'un siège de sécurité pour enfant (1) sur chaque côté d'un siège arrière d'un véhicule,
- détachement et enlèvement d'un élément latéral détachable (6) sur un côté du siège de sécurité pour enfant (1) faisant face à l'autre siège de sécurité pour enfant (1) d'au moins un des sièges de sécurité pour enfant (1), et
- fixation de chaque siège de sécurité pour enfant (1) avec des raccords Isofix aux points d'ancrage du véhicule ou avec une ceinture de siège du véhicule.

16. Procédé d'installation d'au moins deux sièges de sécurité pour enfant (1) dans un véhicule selon la revendication 15, dans lequel le procédé comprend, en outre, l'étape de fixation d'un élément d'absorption d'énergie (9) à l'élément latéral détachable (6) de chaque siège de sécurité pour enfant (1) faisant face à une porte du véhicule.

17. Procédé pour l'installation d'au moins deux sièges de sécurité pour enfant (1) selon l'une quelconque des revendications précédentes 15 à 16, dans lequel le procédé comprend, en outre, l'étape d'agencement d'un troisième siège de sécurité pour enfant entre les deux sièges pour enfant (1) agencés de chaque côté du siège arrière du véhicule.
